# EUROPEAN PATENT SPECIFICATION

(11) **EP 2 284 954 B1**
(45) Date of publication and mention of the grant of the patent: **20.02.2019**
(21) Application number: 10161571.4
(22) Date of filing: 30.04.2010
(51) Int. Cl.: H01R 13/506, H02G 3/14, H01R 13/655, H01R 24/78, H01R 103/00

(54) **A socket formed by an outer cover and a system for fastening the outer cover in said socket.**
Steckdose, die aus einer Außenabdeckung und einem System zur Befestigung der Außenabdeckung in derSteckdose gebildet ist.
Douille formée par un couvercle extérieur et un système pour fixer le couvercle extérieur dans ladite douille.

(30) Priority: 21.07.2009 ES 200901616
(43) Date of publication of application: 16.02.2011
(73) Proprietor: Schneider Electric España, S.A., 08019 Barcelona (ES)
(72) Inventor: Rebolé Olleta, Jose Antonio, 31016 Pamplona (ES)
(74) Representative: Cabinet Plasseraud

(56) References cited:
- EP-A1- 0 743 703
- EP-A1- 1 837 961
- FR-A1- 2 703 843
- FR-A1- 2 888 676
- US-A1- 2003 236 024

## Description

### Field of the Art

The present invention is comprised within the field of electricity, and more specifically within the field of sockets, proposing a socket formed by a base box , an outer cover and a system for fastening the outer cover and the base box, which allows an easy and quick installation of the socket.

### State of the Art

Sockets are normally formed by two parts, a base box in which the terminals for the connection of the cables of the electric network are housed, and an outer cover covering said terminals and allowing the insertion of the male connector in the socket.

The outer cover is conventionally assembled on the base box of sockets by means of screws, which system forces having to loosen the fastening screws to remove the outer cover when the terminals have to be accessed, and again inserting the screws to re-fix the outer cover on the base box, which considerably slows down the work for installing the sockets.

Other existing socket designs establish the assembly of the outer cover on the base box by means of a coupling system by means of snap-fitting, such that when the outer cover is pressed inwardly, it is fixedly anchored to the base. Document FR 2 888 676 and FR 2 703 843 disclose such a socket design.

This system eliminates the problem of having to handle screws for fastening the outer cover, but forces the manufacturer to separately supply the outer cover and the base box which form the assembly of the sockets, which is in turn a drawback due to the need to operate commercially with two separate elements, which have to be joined together by the installer to assemble the sockets in their application.

### Object of the Invention

According to the invention, a socket formed by a base box, an outer cover and a system for fastening the outer cover and the base box is disclosed in claim 1, by means of which the problems of conventional solutions of fastening with screws are eliminated, furthermore allowing the two elements, outer cover and base box, to be joined from the time they leave the factory, without this
involving a problem for assembling the socket in its application installation.

This system object of the invention determines the fastening of the outer cover on the base box of the sockets by means of a double snap-fit by means of flexible tabs of one of the parts, which determine at the end and in a middle area of its length respective teeth-like conformations, with which each tab can selectively establish locking in two positions with respect to a corresponding engagement conformation defined in the other part of said component assembly of the socket.

The locking for engagement of the flexible tabs, by means of the conformation of the end thereof, can easily be released by bending the tabs, whereas a firm fastening of the outer cover on the base box is achieved by means of the locking for engagement with the conformation of the longitudinal middle area of the tabs.

The two component elements of the sockets, i.e., the outer cover and the base box, can thus be supplied jointly, joined to one another by means of the flexible tabs of the outer box, with snap-fitting by means of the conformation of the end of said flexible tabs, this joining being able to easily released to remove the outer cover and be able to access the electrical connection terminals, in order to carry out the installation assembly of the socket.

And, once the electrical connection is carried out by means of placing the outer cover on the base box and by simple pressure until the snap-fit of the conformations of the middle area of the flexible tabs, the fixing of said outer cover on the base box is achieved in a very simple and quick manner.

The system object of the invention therefore has truly advantageous features, acquiring its own identity and a preferred character with respect to the conventional systems for fastening the outer cover in the sockets existing to date.

### Description of the Drawings

Figures 1 and 2 are respective perspective views of a socket equipped with the system of the invention, respectively in the positions of the first and second coupling between the outer cover and the base box.

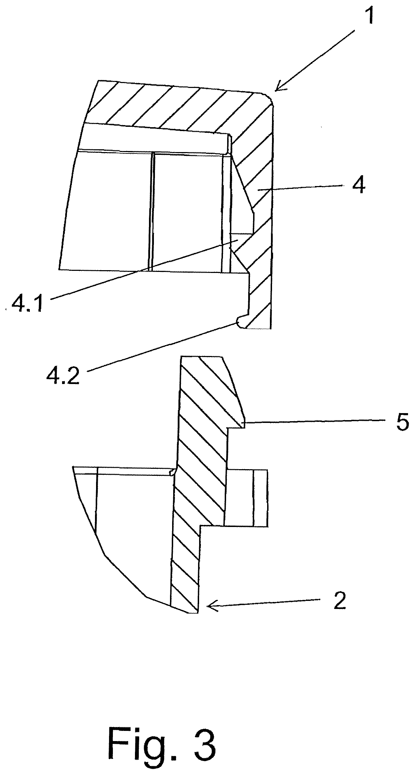

Figures 3, 4 and 5 are respective sectioned detailed views of one of the areas of fastening between the outer cover and the base box in a socket provided with the proposed system, respectively in the positions of uncoupling, first fastening coupling and second fastening coupling between the outer cover and the base box.
Figure 6 shows a socket with the system of the invention according to an embodiment in which the base box has a rack integrated therein.

### Detailed Description of the Invention

The object of the invention relates to a system intended for fastening the outer cover (1) with respect to the base casing (2) in sockets with screw terminals (3) for the connection of the electric cables, in which the terminals (3) are housed inside the base box (2), it being necessary to remove the outer cover (1) to carry out the connections.

This proposed system is based on a coupling for the snap-fit joining between the outer cover (1) and the base box (2) of the sockets, one of the parts being provided with flexible tabs (4), which have in a middle area of their length and at their end part conformations (4.1 and 4.2) in the form of teeth by means of which it is possible to establish a snap-fit of the mentioned flexible tabs (4) with respect to reciprocal conformations (5) in the form of teeth or in the form of housings, defined in the other part of the component assembly of the socket.

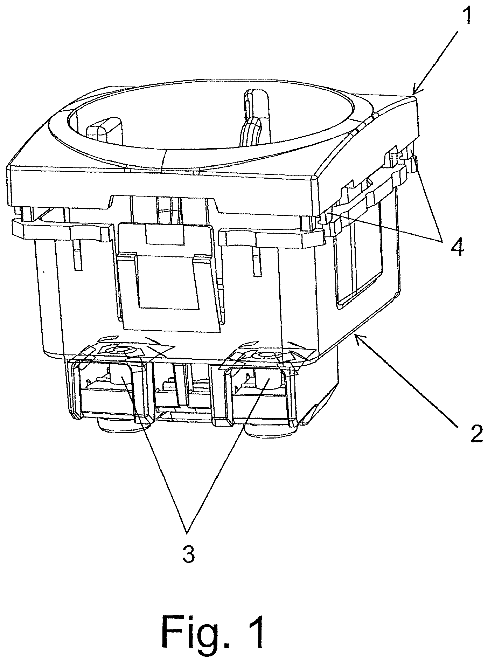

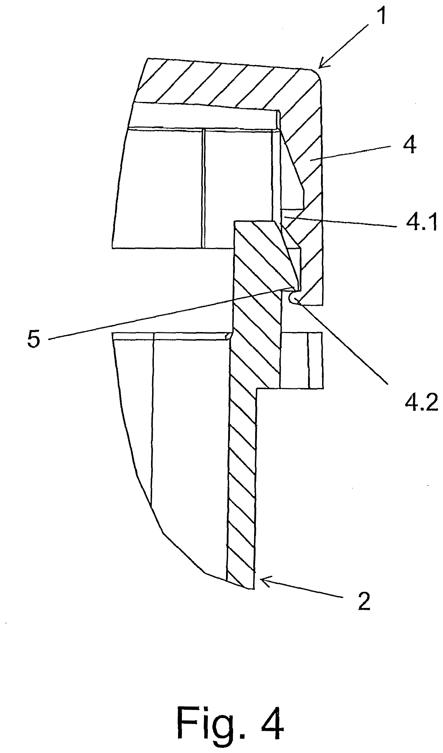

Thus, by means of the conformation (4.2) of the end of the flexible tabs (4) a snap-fit can be established on the engagement conformations (5), as shown in Figure 4, thus determining a provisional joining of the outer cover (1) on the base box (2), as observed in Figure 1, for the joint marketing of both elements as a unit.

Said snap-fit by means of the conformation (4.2) of the end of the tabs (4) determines, however, an engagement which can easily be uncoupled by bending the tabs (4), which allows quickly and easily disassembling the outer cover (1) to access the connection terminals (3), in the installation of the socket.

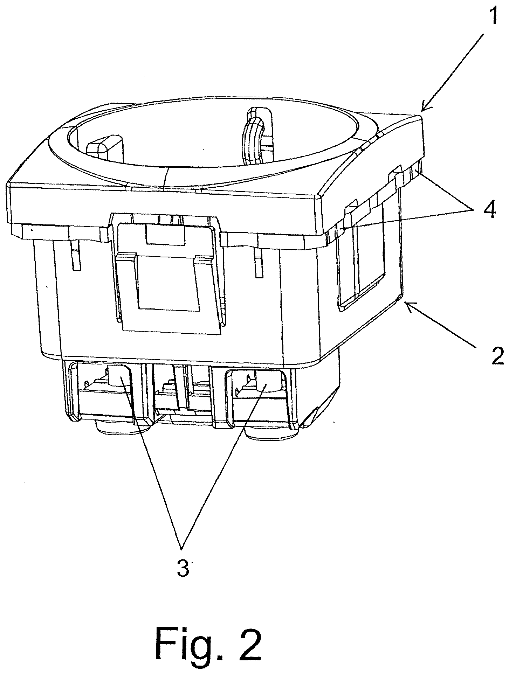

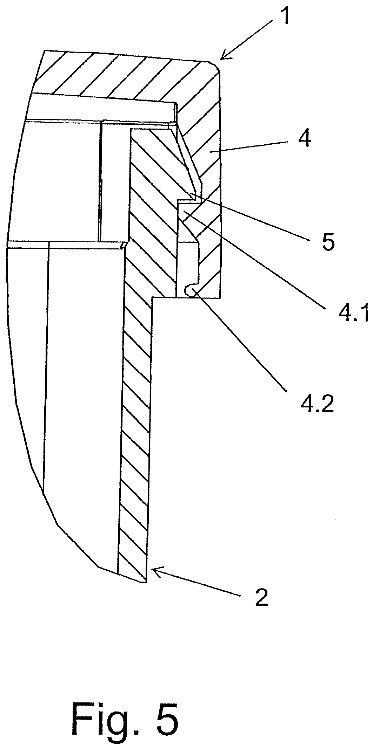

Once the connection of the electric cables in the terminals (3) has been carried out, the outer cover (1) can be incorporated in the assembly on the base box (2) in an equally quick and simple manner by means of simply placing the outer cover (1) in the assembly position and pressing until the flexible tabs (4) establish the snap-fit with the conformation (4.1) of their middle area on the corresponding engagement conformations (5), as shown in Figure 5, whereby the outer cover (1) is fixedly joined to the base box (2) in the position of the installation assembly, as observed in Figure 2.

This solution of assembly of the outer cover (1) with respect to the base box (2) with a provisional retaining snap-fit which is easy to disassemble, for the joint marketing of those two component elements of the sockets, can be carried out, in the same conditions, both with the flexible tabs (4) defined in the outer cover (1) and the engagement conformations (5) defined in the base box (2), according to the depicted embodiment, and in a reverse arrangement, i.e., with the flexible tabs (4) defined in the base box (2) and the engagement conformations (5) defined in the outer cover (1).

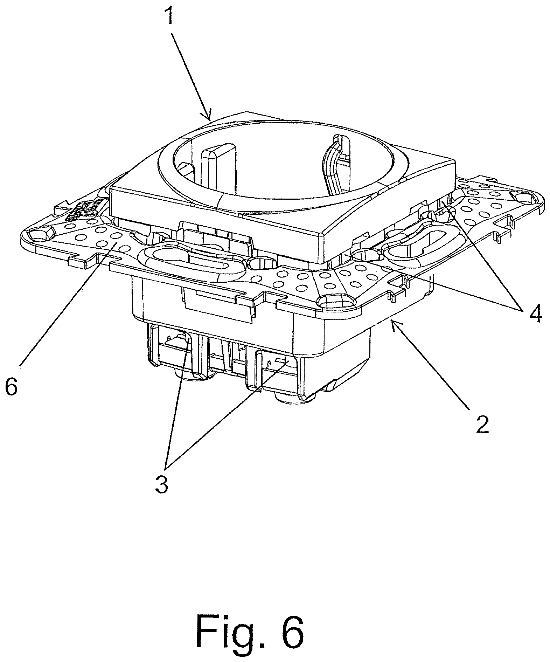

The system is also applicable in the sockets the base box (2) of which has a rack (6) integrated therein for the fastening in the installation assembly, as in the embodiment depicted in Figure 6, the engagement conformations (5) being able to be defined in this case in said rack (6) in order to fasten the outer cover (1) thereon by means of the flexible tabs (4).

## Claims

1. Socket formed by a base box (2), an outer cover (1) and a system for fastening the outer cover and the base box (2), connection terminals (3) being housed inside the base box (2), wherein the outer cover (1) has to be removed to have access to the connection terminals, one of the parts of the component assembly of the socket has flexible tabs (4) having at an end part conformation (4.2), **characterized in that** said flexible tabs (4) have a conformation (4.1) in a middle area of the length of said flexible tabs (4), the two conformations (4.1, 4.2) having the form of teeth, said fastening system allowing to establish a retaining snap-fit in two selective positions upon engaging engagement conformations (5) defined in the other part of the component assembly of the socket, the form of said engagement conformations (5) being reciprocal to that of said conformations of the flexible tabs (4), the conformation (4.2) at the end part of the flexible tabs (4) having a rounded form.

2. Socket according to claim 1, **characterized in that** the conformation (4.2) of the end part of the flexible tabs (4) is adapted to establish a provisional fastening of the outer cover (1) which can be disassembled with respect to the base box (2) forming the component assembly of the socket.

3. Socket according to claim 1, **characterized in that** the conformation (4.1) of the middle area of the length of the flexible tabs (4) is adapted to establish a fixed fastening of the outer cover (1) on the base box (2) forming the component assembly of the socket.

4. Socket according to claims 1 to 3, **characterized in that** the flexible tabs (4) form an integral part of the outer cover (1) of the socket, the engagement conformations (5) being defined in the base box (2).

5. Socket according to claims 1 to 3, **characterized in that** the flexible tabs (4) form an integral part of the base box (2) of the socket, the engagement conformations (5) being defined in the outer cover (1).

6. Socket according to claims 1 to 3, **characterized in that** the flexible tabs (4) form an integral part of the outer cover (1) of the socket, the base cover (2) having a rack (6) integrated therewith, in which the engagement conformations (5) are defined.

## Patentansprüche

1. Steckdose, die aus einem Sockelkasten (2), einer Außenabdeckung (1) und einem System zum Befestigen der Außenabdeckung und des Sockelkastens (2) gebildet ist, wobei Anschlussklemmen (3) im Inneren des Sockelkastens (2) untergebracht sind, wobei die Außenabdeckung (1) entfernt werden muss, um Zugang zu den Anschlussklemmen zu erhalten, wobei eines der Teile der Komponentenbaugruppe der Steckdose flexible Laschen (4) aufweist, die an einem Ende eine Teilkonfiguration (4.2) aufweisen,
**dadurch gekennzeichnet, dass** die flexiblen Laschen (4) in einem mittleren Bereich der Länge der flexiblen Laschen (4) eine Konfiguration (4.1) aufweisen, wobei die beiden Konfigurationen (4.1, 4.2) die Form von Zähnen aufweisen, wobei das Befestigungssystem es ermöglicht, einen Rückhalte-Schnappsitz in zwei selektiven Positionen zu schaffen, wenn Eingriffskonfigurationen (5), die in dem anderen Teil der Komponentenbaugruppe der Steckdose definiert sind, in Eingriff gebracht werden, wobei die Form der Eingriffskonfigurationen (5) reziprok zu den Konfigurationen der flexiblen Laschen (4) ist, wobei die Konfiguration (4.2) am Ende des Teils der flexiblen Laschen (4) eine abgerundete Form aufweist.

2. Steckdose nach Anspruch 1, **dadurch gekennzeichnet, dass** die Konfiguration (4.2) des Endteils der flexiblen Laschen (4) angepasst ist, um eine vorläufige Befestigung der Außenabdeckung (1) herzustellen, die in Bezug auf den Sockelkasten (2), der die Komponentenbaugruppe der Steckdose bildet, demontierbar ist.

3. Steckdose nach Anspruch 1, **dadurch gekennzeichnet, dass** die Konfiguration (4.1) des mittleren Bereichs der Länge der flexiblen Laschen (4) angepasst ist, um eine feste Befestigung der Außenabdeckung (1) an dem Sockelkasten (2) herzustellen, der die Komponentenbaugruppe der Steckdose bildet.

4. Steckdose nach den Ansprüchen 1 bis 3, **dadurch gekennzeichnet, dass** die flexiblen Laschen (4) einen integralen Bestandteil der Außenabdeckung (1) der Steckdose bilden, wobei die Eingriffskonfigurationen (5) im Sockelkasten (2) definiert sind.

5. Steckdose nach den Ansprüchen 1 bis 3, **dadurch gekennzeichnet, dass** die flexiblen Laschen (4) einen integralen Bestandteil des Sockelkastens (2) der Steckdose bilden, wobei die Eingriffskonfigurationen (5) in der Außenabdeckung (1) definiert sind.

6. Steckdose nach den Ansprüchen 1 bis 3, **dadurch gekennzeichnet, dass** die flexiblen Laschen (4) einen integralen Bestandteil der Außenabdeckung (1) der Steckdose bilden, wobei die Basisabdeckung (2) ein integriertes Gestell (6) aufweist, in dem die Eingriffskonfigurationen (5) definiert sind.

## Revendications

1. Douille formée par un boîtier de base (2), un couvercle extérieur (1) et un système pour fixer le couvercle extérieur et le boîtier de base (2), des bornes de raccordement (3) étant logées à l'intérieur du boîtier de base (2), dans laquelle le couvercle extérieur (1) doit être enlevé pour avoir accès aux bornes de raccordement, l'une des parties de l'assemblage de composants de la douille a des pattes souples (4) ayant, au niveau d'une partie d'extrémité, une conformation (4.2), **caractérisée en ce que** lesdites pattes souples (4) ont une conformation (4.1) dans une zone centrale de la longueur desdites pattes souples (4), les deux conformations (4.1, 4.2) ayant la forme de dents, ledit système de fixation permettant d'établir un encliquetage de retenue à deux positions sélectives lors de la mise en prise de conformations de mise en prise (5) définies dans l'autre partie de l'assemblage de composants de la douille, la forme desdites conformations de mise en prise (5) étant réciproque à celle desdites conformations des pattes souples (4), la conformation (4.2) à la partie d'extrémité des pattes souples (4) ayant une forme arrondie.

2. Douille selon la revendication 1, **caractérisée en ce que** la conformation (4.2) de la partie d'extrémité des pattes souples (4) est adaptée pour établir une fixation provisoire du couvercle extérieur (1) qui peut être démonté du boîtier de base (2) formant l'assemblage de composants de la douille.

3. Douille selon la revendication 1, **caractérisée en ce que** la conformation (4.1) de la zone centrale de la longueur des pattes souples (4) est adaptée pour établir une fixation permanente du couvercle extérieur (1) sur le boîtier de base (2) formant l'assemblage de composants de la douille.

4. Douille selon les revendications 1 à 3, **caractérisée en ce que** les pattes souples (4) font partie intégrante du couvercle extérieur (1) de la douille, les conformations de mise en prise (5) étant définies dans le boîtier de base (2).

5. Douille selon les revendications 1 à 3, **caractérisée en ce que** les pattes souples (4) font partie intégrante du boîtier de base (2) de la douille, les conformations de mise en prise (5) étant définies dans le couvercle extérieur (1).

6. Douille selon les revendications 1 à 3, **caractérisée en ce que** les pattes souples (4) font partie intégrante du couvercle extérieur (1) de la douille, le couvercle de base (2) ayant une clayette (6) intégrée à celui-ci, dans laquelle les conformations de mise en prise (5) sont définies.
